# EUROPEAN PATENT APPLICATION

(11) **EP 4 733 225 A1**
(43) Date of publication of application: **29.04.2026**
(21) Application number: 24208270.9
(22) Date of filing: 23.10.2024
(51) Int. Cl.: B65G 1/04

(54) **A CELL BLOCKING DEVICE**

(71) Applicant: AutoStore Technology AS, 5578 Nedre Vats (NO)
(72) Inventor: MYRBAKKEN, Joakim, 5578 Nedre Vats (NO); KÕRGE-HÅRAJUVET, Geir, 5578 Nedre Vats (NO)
(74) Representative: Kilburn & Strode LLP

(57) **Abstract**

The disclosure relates to a cell blocking device for a storage grid, the cell blocking device comprising: a panel configured to engage with a reinforcing structure of the storage grid to block a grid cell thereof; and a protruding element configured to enable selective movement of the panel with respect to the grid cell.

## Description

### TECHNICAL FIELD

The disclosure relates to a cell blocking device. More particularly, it relates to a cell blocking device for a storage grid, to an automated storage and retrieval system, and to a method for selectively blocking a grid cell of an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

A container-handling vehicle may lower a container down a port column of the grid, the port column being adjacent to a port. Once items have been removed from and/or added to the container at the port, the container may be raised by the container-handling vehicle up the port column to be restored in the storage grid. In some examples, different port columns are designated for lowering and raising of containers respectively. In some examples, different container-handling vehicles may be used to lower and to raise the containers respectively.

From time to time, maintenance may be performed on a port to ensure it is operating as expected or as desired. This often involves a technician working within the space occupied by the port and/or within the port column. There is a risk of containers being lowered onto the technician or of objects falling from containers onto the technician, which can make maintenance of ports or port columns less safe than would be desirable.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an example cell blocking device according to the present disclosure;
Fig. 6 shows a further example cell blocking device according to the present disclosure;
Fig. 7 shows a method for selectively blocking a grid cell according to the present disclosure.

### DETAILED DESCRIPTION

In overview, the disclosure relates to a cell blocking device for a storage grid. The storage grid can form part of an automated storage and retrieval system in which stacks of containers are stored in vertical columns between vertical frame members.

The cell blocking device includes a panel which is configured to engage with a reinforcing structure of the storage grid in order to block a grid cell of the storage grid. The reinforcing structure can be coupled to one or more of the vertical frame members and can support or receive the panel in its blocking position. The panel can be horizontally oriented to block a column of the storage grid, which prevents containers or objects being lowered or falling down the column such that a technician towards the bottom of the column does not risk being hit and injured.

The cell blocking device includes a protruding element configured to enable selective movement of the panel with respect to the grid cell. For example, the protruding element can be manipulated to rotate or slide the panel between positions in which it does or does not block the grid cell. This enables the vertical column to be selectively blocked when maintenance is being performed and to be selectively unblocked when normal operation resumes and it is desired to raise or lower a container through the column. This provides a reliable, reversible, fast and efficient way of selectively blocking or unblocking the column as needed.

Previous approaches focusing particularly on safety have involved stopping operation of the automated storage and retrieval system while maintenance is performed. However, this leads to a lot of downtime in which items cannot be removed or added to the storage grid, and therefore makes the system as a whole less efficient. This is especially the case for large storage grids and/or storage grids having a large number of ports. Other previous approaches focusing particularly on efficiency have involved continuing operation of the automated storage and retrieval while the maintenance is performed, potentially relying on instructing container-handling vehicles to not use the relevant vertical column while this occurs. However, this may be less safe than is desirable due to the risk of errors or delay in control systems or inadvertent dropping of objects down the column.

The approach of the present disclosure optimises both the safety of technicians and the efficiency of storage in and retrieval from a storage grid. This is achieved in a particularly reliable manner which avoids risks associated with mechanical faults or software errors.

### Automated storage and retrieval system overview

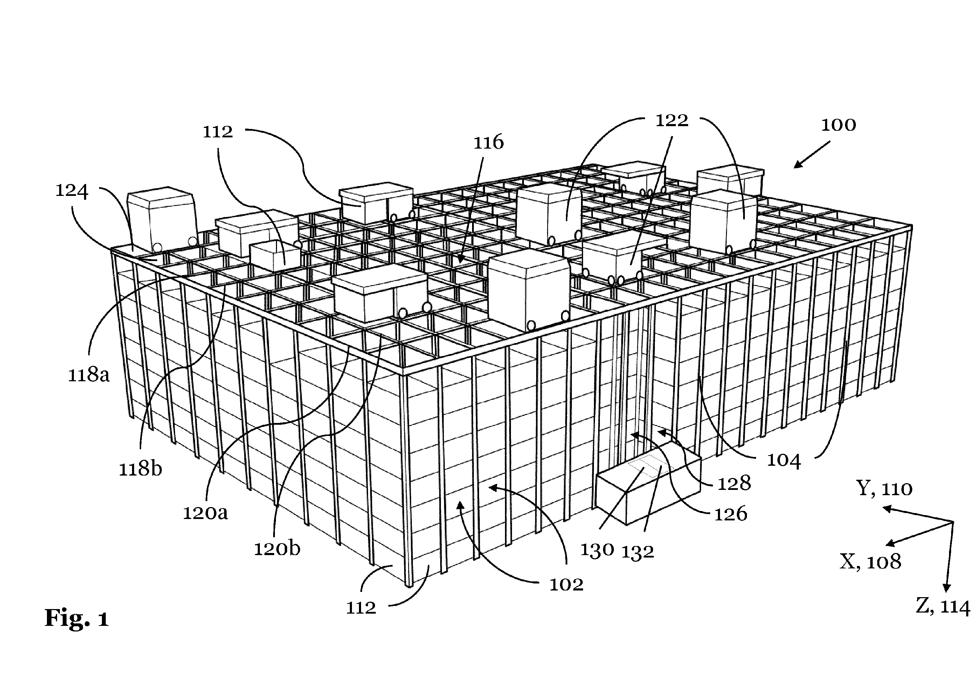

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

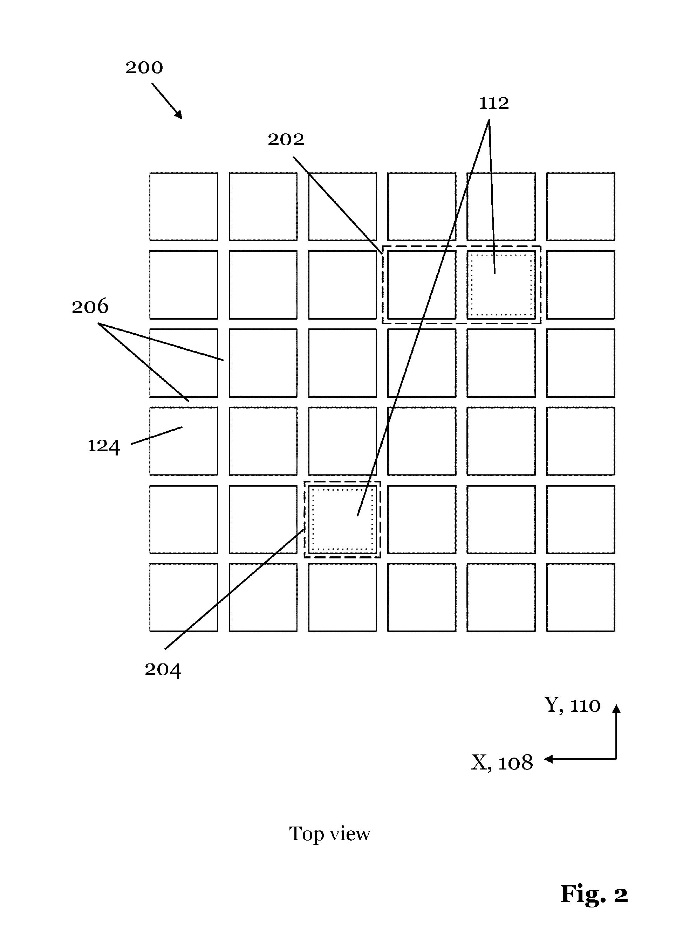

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

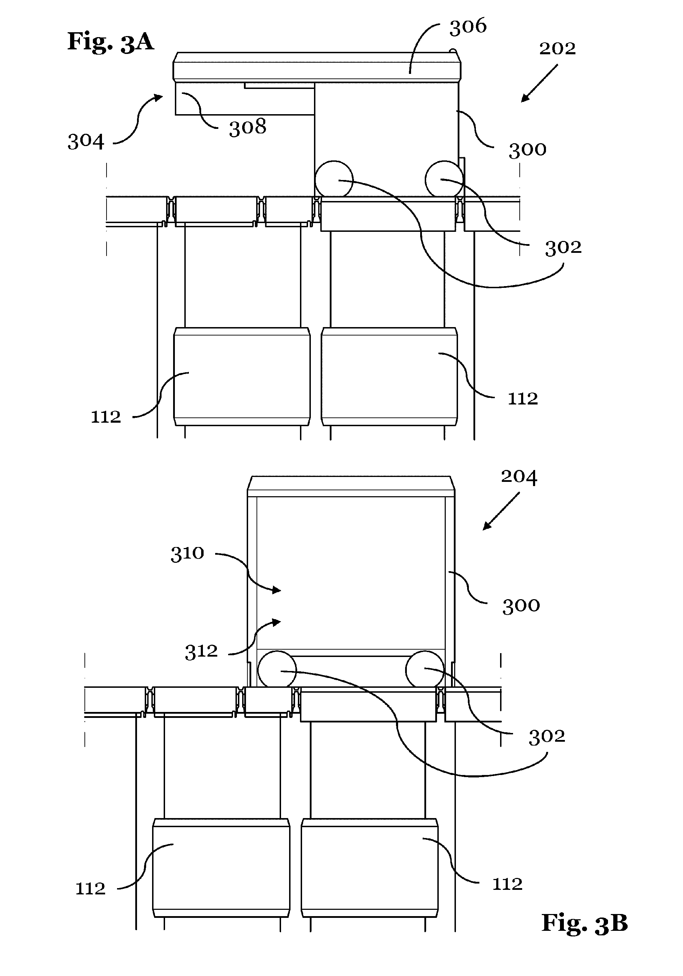

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

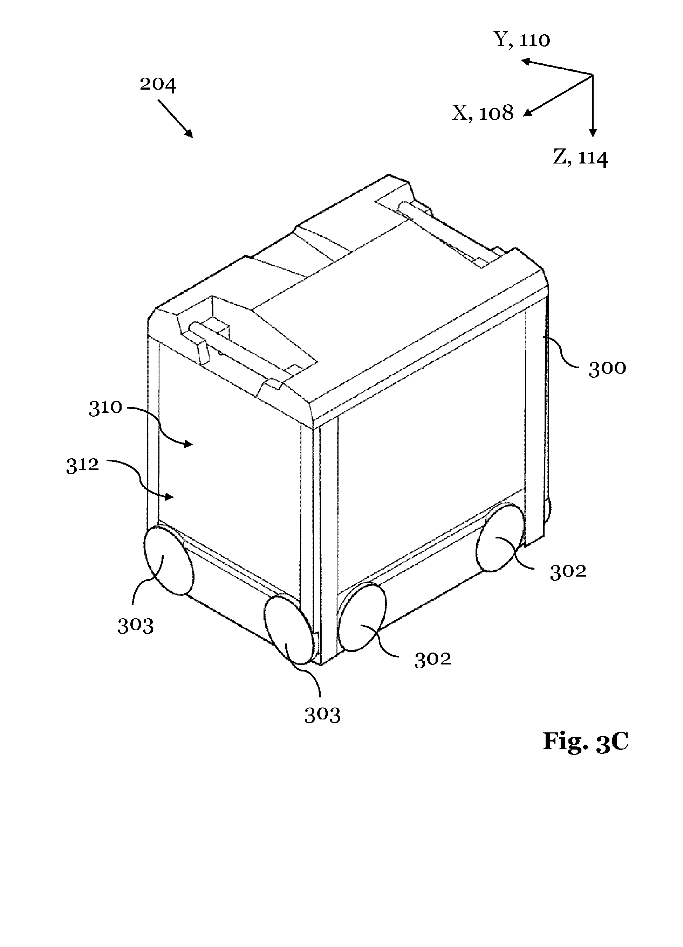

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

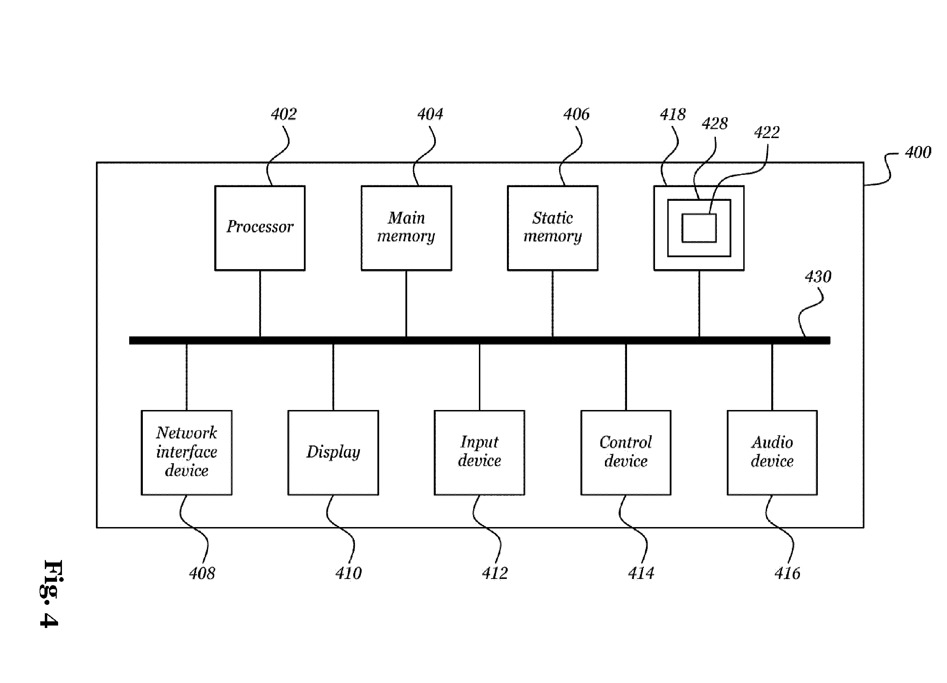

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

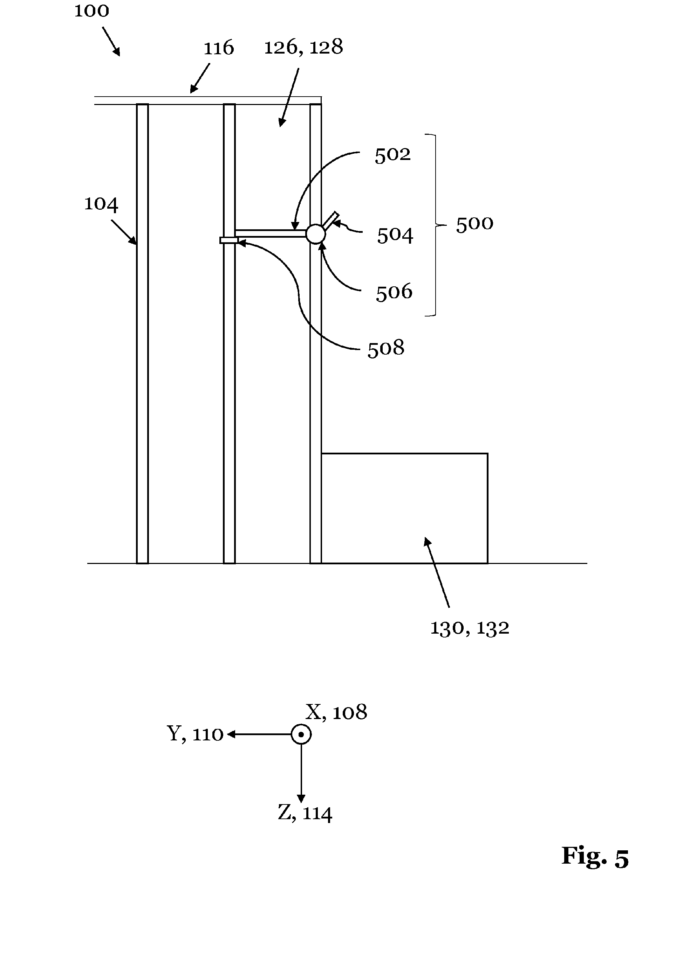

Fig. 5 shows an example cell blocking device 500 according to the present disclosure.

In more detail, Fig. 5 depicts a portion of the storage grid 100 comprising the vertical frame members 104 and the rail system 116 (see Fig. 1). The portion depicted is at an edge or periphery of the storage grid 100 and may continue to the left of Fig. 5 (in the positive Y-direction). Fig. 5 depicts the port column 126, 128 at the periphery of the storage grid 100 and the port 130, 132 adjacent to the port column 126, 128. The cell blocking device 500 is implemented in the port column 126, 128 in Fig. 5. In other examples, the cell blocking device 500 may be implemented in a different vertical column of the storage grid 100, which may be at a periphery of the storage grid 100 or maybe within the storage grid (e.g. further in the positive Y-direction in Fig. 5).

The cell blocking device comprises a panel 502. The panel 502 maybe described as a planar portion, a plate or a board. The panel 502 is configured to engage with a reinforcing structure 508 of the storage grid 100. In the example of Fig.5, the panel 502 is configured to be supported on the reinforcing structure 508. In other examples, the panel 502 may be configured to be received between upper and lower portions of a reinforcing structure as described herein.

As is also apparent from Fig. 1 and Fig. 2 and the related discussion, the vertical frame members 104 may be considered to define a grid in the X-Y plane made up of grid cells extending in the X-direction 108 and the Y-direction 110. Each grid cell is dimensioned to receive a container 112, i.e. is slightly larger than the X-Y extent of the container 112. Adjacent to each of the four corners of the grid cell/container 112 there maybe a respective one of the frame members 104. Within each vertical column defined between a respective four vertical frame members 104, the containers 112 may be stacked in the Z-direction 114. Therefore, a grid cell may be considered to be defined within a vertical column 102 of the storage grid 100 and to be defined in the X-Y plane.

The panel 502 can be selectively positioned such that it blocks a grid cell of the storage grid 100. The X-Y extent of the panel 502 can be dimensioned to be the same size or approximately the same size as the X-Y extent of a grid cell such that it is dimensioned to block the full X-Y extent of the grid cell. The X-Y extent of the panel 502 can be dimensioned to be slightly larger than the X-Y extent of a container 112. In other words, the panel 502 can form a barrier which prevents containers 112, items for storing within the containers, or other objects, from falling down the vertical column in which the cell blocking device 500 is implemented, i.e. to block a grid cell at a particular height within the vertical column.

As depicted in Fig. 5, the panel 502 may be used to block the port column 126, 128. When a technician is performing maintenance on the port 130, 132, sections or modules of the port 130, 132 may be removed and the technician may be located adjacent to or in the bottom of the port column 126, 128. Objects falling or being lowered down the port column 126, 128 when this is the case risk injuring the technician. The cell blocking device 500 therefore increases the safety of technicians and increases the efficiency of the system through avoiding pausing operation of the automated storage and retrieval system. The cell blocking device 500 may not be implemented in or part of a port 130, 132. The cell blocking device 500 may be independent of any ports 130, 132. The cell blocking device 500 may be unconnected to any ports 130, 132. The cell blocking device 500 may be implemented/disposed vertically separated from the port 130, 132, for example with a vertical separation of at least 1m or at least 2m.

In some examples, the cell blocking device 500 may be implemented in a vertical column adjacent to the port column 126, 128. For example, some ports 130, 132 may comprise components extending into such adjacent or neighbouring vertical columns, which may require technicians to also enter the bottoms of those vertical columns. The cell blocking device 500 may be implemented in any vertical column of the storage grid 100, i.e. not in or adjacent to a port column 126, 128. For example, such vertical columns may be in need of maintenance to the associated vertical frame members 104 or may be in need of cleaning.

The panel 502 may be formed from a material with sufficient strength such that it withstands being hit by an object falling from above and stops the falling of that object. This strength/material composition enables the thickness of the panel 502 in the Z-direction to be relatively small (e.g. relative to the dimensions of the panel 502 in the X-direction 108 and the Y-direction 110). The panel 502 may be formed from a metal such as steel, aluminium or titanium.

The cell blocking device 500 comprises a protruding element 504. The protruding element is configured to enable selective movement of the panel 502 with respect to the grid cell. In other words, the panel 502 may be moveable via movement of the protruding element 504. The protruding element 504 may be integrally formed with or fixed to the panel 502 such that movement of the protruding element 504 causes a corresponding movement of the panel 502. When the panel 502 is implemented in the storage grid 100, the protruding element 504 may protrude to an exterior of the storage grid 100. A slot may be provided in an outer wall surrounding the storage grid 100 for the protruding element 504 to protrude out of.

The cell blocking device 500 may comprise a pivot or hinge 506 about which the panel 502 and the protruding element 504 can rotate. The pivot may be coupled to one of the vertical frame members 104 and to the panel 502 and/or the protruding element 504 such that the panel 502 and the protruding element 504 can be rotated relative to the vertical frame member 104. This rotation may be in the Y-Z plane.

In some examples, the cell blocking device 500 may comprise two pivots 506 separated from each other in the X-direction. The second pivot, which may not be visible in Fig. 5 due to being behind the depicted pivot 506, may be coupled to the other of the two vertical frame members 104 adjacent to an outer corner of the grid cell/panel 502 at the periphery of the storage grid 100.

The panel 502 may be rotatable between a horizontal orientation, as depicted in Fig. 5, and a vertical orientation. In the horizontal orientation, the panel 502 may block the grid cell. In the vertical orientation, the panel 502 may be disposed flat against inner surfaces of the frame members 104 at the periphery of the storage grid 100 such that raising or lowering of a container 112 through the port column 126, 128 is not obstructed. The panel 502 may be moved from the horizontal to the vertical orientation by clockwise movement of the protruding element 504 about the pivot 506. The panel 502 may be moved from the vertical to the horizontal orientation by anti-clockwise movement of the protruding element 504 about the pivot 506.

A reinforcing structure 508 may be fixed to the storage grid 100, i.e. to one or more of the vertical frame members 104 thereof adjacent to corners of the grid cell which the panel 502 is configured to block. For example, the reinforcing structure 508 may be fixed to at least one or both of the two vertical frame members 104 within the storage grid 100 and displaced in the Y-direction 110 from the pivot(s) 506 at the periphery of the storage grid 100. The reinforcing structure 508 may be disposed at the same or approximately the same height as the pivot(s) 506.

The reinforcing structure 508 may comprise a support, platform or bracket extending from one or more of the vertical frame members 104 in the X-direction 108 and/or the Y-direction 110. Such a support, platform or bracket may extend only a short distance from the respective vertical frame member 104, without extending between two vertical frame members 104, such that it provides support at a corner of the panel 502. Alternatively or in addition, the reinforcing structure 508 may comprise one or more bars or beams extending between vertical frame members 104 in the X-direction 108 and/or in the Y-direction 110, which may provide support along one or more edges of the panel 502. The reinforcing structure 508 may be positioned at the corners and/or the edges of the grid cell such that it does not impede movement of containers 112 through the relevant vertical column or through adjacent vertical columns. The panel 502 may engage with the reinforcing structure 508 at one or more corners of the panel 502 and/or along one or more edges of the panel 502.

The reinforcing structure 508 may be positioned and dimensioned such that at least part of the panel 502 is supported on the reinforcing structure 508 in its horizontal orientation. In other examples, the panel 502 may be received between upper and lower portions of a reinforcing structure as described herein.

The reinforcing structure 508 may be formed from a material with sufficient strength such that it withstands the panel 502 supported thereon being hit by an object falling from above and stops the falling of that object or damage to/falling of the panel 502 itself. The reinforcing structure 508 may be formed from a metal such as steel, aluminium or titatium.

The cell blocking device 500 may be fixed to the storage grid 100 in a permanent or semi-permanent manner. This may be particularly useful when the cell blocking device 500 is implemented in a port column 126, 128 adjacent to a port, on which maintenance may be performed more regularly than on other vertical columns. The cell blocking device 500 can selectively rotated between the horizontal orientation that blocks the vertical column and the vertical orientation which does not block the vertical column. This increases the safety of operations performed on the automated storage and retrieval system and the efficiency of its utilisation.

The cell blocking device 500 may be fixed to the storage grid 100 at a height such that a human located on the ground surrounding the storage grid 100 cannot reach it. This may help prevent inadvertent movement of the cell blocking device 500. For example, the cell blocking device 500 may be fixed to the storage grid at a height of approximately 2.5m, approximately 2.6m, approximately 2.7m, approximately 2.8m, approximately 2.9m, approximately 3m or more. The reinforcing structure 508 may be fixed at a corresponding height.

The protruding element 504 is depicted in Fig. 5 as forming an obtuse angle with the panel 502. In other examples, the protruding element 504 forms an acute angle, a perpendicular angle or a 180° angle with the panel 502. An operator may selectively move the panel 502 by moving (e.g. rotating) the protruding element 504. This may be performed manually by hand, or may be performed using an elongated tool with an end configured to engage with the protruding element 504 (e.g. a hook or gripper).

In some examples, the movement may be performed electronically using an actuator configured to effect movement of the cell blocking device 500 in response to application of a control signal. A motor and/or driver may be implemented in or coupled to the actuator. The actuator may be incorporated in the cell blocking device 500 or may be fixed to one or more of the vertical frame members 104 to drive movement of the panel 502 relative to the storage grid 100. A sensor may be incorporated in the cell blocking device 500 or may be fixed to one or more of the vertical frame members 104. The sensor may be configured to detect whether the cell blocking device 500 is blocking the grid cell. For example, the sensor may be any suitable type of distance sensor or light beam sensor. The actuator and/or the sensor may be communicatively coupled to a control and monitoring system of the automated storage and retrieval grid, for example to the processing system 400 described in relation to Fig. 4. This may enable sending of the control signal to the actuator to cause the selective movement of the panel 502 and/or to enable receipt of a signal from the sensor to check whether the panel 502 is blocking the grid cell.

While the cell blocking device 500 is depicted in Fig. 5 as blocking one gird cell, in some examples the cell blocking device 500 may be dimensioned to block multiple grid cells. For example, the cell blocking device 500 may be dimensioned to block two, three or more grid cells extending into the storage grid 100 in the Y-direction 110 from the periphery of the storage grid 100. In other words, the width of the panel 502 in the Y-direction 110 may be approximately equal to the collective width of two, three or more of the grid cells. This may be particularly useful when the port 130, 132 is of a type which extends several grid cells into the storage grid 100.

The cell blocking device 500 may comprise a locking device configured to lock the panel 502 in position such that it blocks the grid cell (i.e. locks the panel 502 in the horizontal orientation). This may guard against inadvertent or unauthorised movement of the cell blocking device 500. The locking device may lock the protruding element 504 or another part of the cell blocking device 500 to one or more of the vertical frame members 104 or to the outer wall surrounding the storage grid 100. For example, the locking device may hold the protruding element 504 in proximity to one of the vertical frame members 104 or to the outer wall such that it cannot be pulled downward (in the clockwise direction) away from the vertical frame member 104. The locking device may comprise a bolt, a lock/padlock and key, a chain and/or any other suitable form of locking device. A corresponding locking device may lock the cell blocking device 500 in the vertical orientation.

In some examples, the locking device may not be required if the cell blocking device 500 is implemented at a height such that a human located on the ground surrounding the storage grid 100 cannot reach it. In some examples, the cell blocking device 500 may be implemented at any height, e.g. a lower height that is reachable by a human located on the ground surrounding the storage grid 100, if the cell blocking device 500 comprises the locking device.

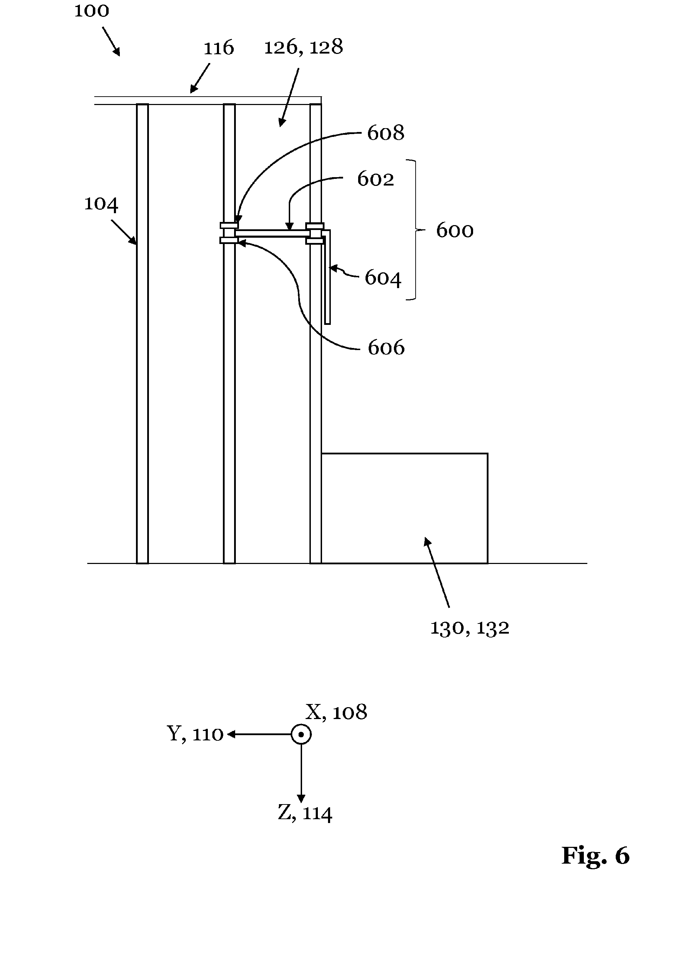

Fig. 6 shows a further example cell blocking device 600 according to the present disclosure. The cell blocking device 600 may comprise corresponding features and may be implemented in corresponding ways to the cell blocking device 500 described in relation to Fig. 5, except where stated otherwise.

The cell blocking device 600 comprises a panel 602, which may comprise corresponding features and properties to the panel 502. The cell blocking device 600 comprises a protruding element 604, which may comprise corresponding features and properties to the protruding element 604. The panel 602 may be fixed to the protruding element 604. The panel 602 may be integrally formed with the protruding element 604. By way of non-limiting example, Fig. 6 depicts the protruding element 604 and the panel 602 being oriented perpendicular to each other such that they form an L-shape. In other examples, the protruding element 604 may protrude at a different angle relative to the panel 602, and may for example have the form of the protruding element 504 depicted in Fig. 5.

A reinforcing structure 606, 608 is fixed to one or more of the vertical frame members 104 at the corners of the grid cell which the panel 602 is configured to block. As depicted in Fig. 6, the reinforcing structure 606, 608 may comprise lower portions 606 and upper portions 608. The panel 602 may be received between the lower portions 606 and the upper portions 608. This may provide a particularly stable and reliable arrangement holding the panel 602 in the blocking position. Each of the lower portion 606 and the upper portion 608 may comprise a respective instance of the one or more platforms, supports, brackets, beams or bars which may form the reinforcing structure 508 described in relation to Fig. 5. In some examples, only the lower portions 606 may be present in the arrangement of Fig. 6, i.e. a reinforcing structure corresponding to that of Fig. 5 may be provided.

The cell blocking device 600 may be selectively slidable parallel to the Y-axis. The cell blocking device 600 may be selectively slidable between a first position in which the panel 602 does not block the grid cell and a second position (depicted in Fig. 6) in which the panel 602 does block the grid cell. Movement of the panel 602 between these first and second positions may be effected by moving the protruding element 604 towards/away from the storage grid 100, which may cause a corresponding movement of the panel 602. This movement may be performed manually, with the use of an elongated tool, or electronically, as also described in relation to Fig. 5. A slot may be provided in an outer wall surrounding the storage grid 100 for the cell blocking device 600 to be slid into and out of.

The cell blocking device 600 may not be fixed to the storage grid 100, but instead may be selectively insertable into and removeable from the storage grid in one or more different locations around the storage grid 100. This may be particularly useful for making flexible use of a smaller number of the cell blocking devices in a large number of locations according to need.

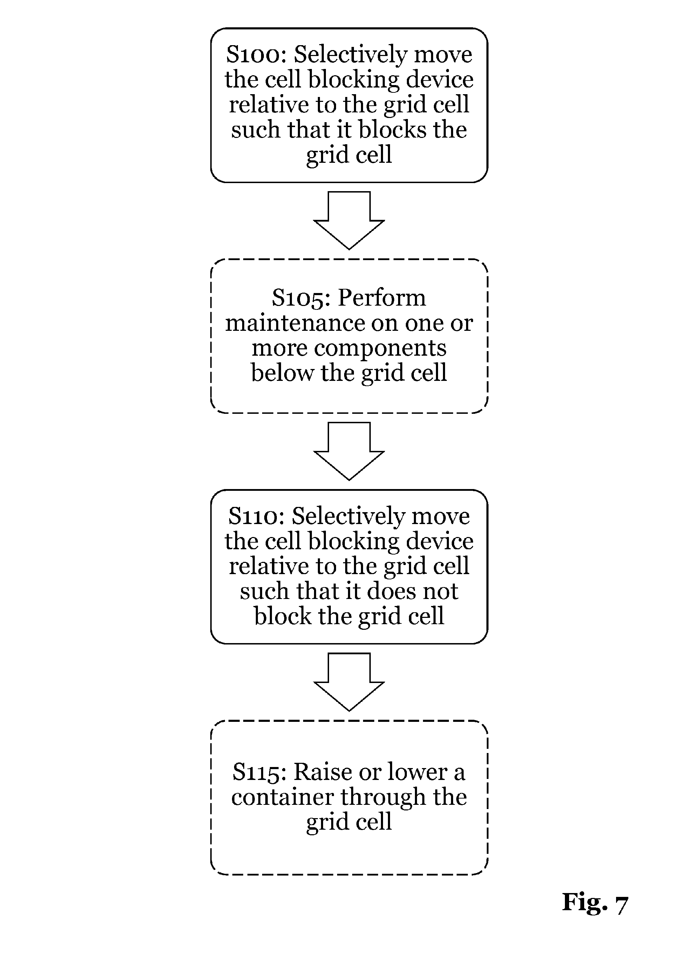

Fig. 7 depicts a method for selectively blocking a grid cell according to the present disclosure. The method maybe performed using any of the cell blocking devices 500, 600 described herein and may be applied to the storage grid 100 described herein.

The method comprises a step S100 of selectively moving the cell blocking device relative to the grid cell such that it blocks the grid cell. This movement may comprise rotating the panel 502 from the vertical to the horizontal orientation as described in relation to Fig. 5. This movement may comprise sliding the panel 602 from the first position to the second position as described in relation to Fig. 6.

The method may comprise a step S105 of performing maintenance on one or more components below the grid cell, for example performing maintenance at or adjacent to the bottom of a port column 126, 128.

The method comprises a step S110 of selectively moving the cell blocking device relative to the grid cell such that it does not block the grid cell. The movement may comprise an opposite movement pattern to that performed in step S100. The movement may comprise rotating the panel 502 from the horizontal to the vertical orientation as described in relation to Fig. 5. The movement may comprise sliding the panel 602 from the second to the first position as described in relation to Fig. 6.

The method may comprise a step S115 of raising or lowering a container 112 through the grid cell, for example raising or lowering the container 112 through a port column 126, 128.

The present disclosure also comprises a cell blocking device for a storage grid, the cell blocking device comprising a panel configured to engage with a reinforcing structure of the storage grid to block a grid cell thereof, and an actuator configured to cause selective movement of the panel with respect to the grid cell. The cell blocking device may comprise corresponding features to any of the cell blocking devices described herein. The storage grid may comprise corresponding features to the storage grid described herein.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A cell blocking device for a storage grid, the cell blocking device comprising:
a panel configured to engage with a reinforcing structure of the storage grid to block a grid cell thereof; and
a protruding element configured to enable selective movement of the panel with respect to the grid cell.

2. The cell blocking device according to claim 1, comprising a locking device configured to lock the panel in position such that it blocks the grid cell.

3. The cell blocking device according to claim 1 or claim 2, wherein the protruding element is configured to enable rotation of the panel between a vertical orientation and a horizontal orientation, the panel blocking the grid cell in the horizontal orientation.

4. The cell blocking device according claim 1 or claim 2, wherein the protruding element is configured to enable sliding of the panel in a horizontal direction between a first position and a second position, the panel blocking the grid cell in the second position.

5. The cell blocking device according to any preceding claim, wherein the panel is configured to simultaneously block multiple grid cells of the storage grid.

6. An automated storage and retrieval system comprising:
the cell blocking device of any preceding claim; and
the storage grid, comprising a frame formed by a plurality of vertical frame members forming adjacent vertical columns for storing stacks of containers therein.

7. The automated storage and retrieval system according to claim 6, wherein the reinforcing structure is coupled to at least one of the vertical frame members.

8. The automated storage and retrieval system according to claim 7, wherein the panel is configured to be supported from underneath by the reinforcing structure when the panel is blocking the grid cell, or wherein the panel is configured to be received between lower and upper portions of the reinforcing structure when the panel is blocking the grid cell.

9. The automated storage and retrieval system according to any of claims 6-8, comprising a pivoting mechanism coupled to the frame and to the cell blocking device, the pivoting mechanism configured to enable rotational movement of the panel via movement of the protruding element.

10. The automated storage and retrieval system according to any of claims 6-9, wherein the cell blocking device is fixed permanently to the storage grid.

11. The automated storage and retrieval system according to any of claims 6-10, wherein the cell blocking device is selectively removable from the storage grid.

12. The automated storage and retrieval system according to any of claims 6-11, wherein the reinforcing structure is located at least 3m above a bottom of the storage grid such that the cell blocking device is configured to block a grid cell at a height of at least 3m above the bottom of the storage grid.

13. The automated storage and retrieval system according to any of claims 6-12, comprising:
a port column at a periphery of the storage grid; and
a port adjacent to the port column and configured to provide access to an interior of a container transported to the port via the port column,
wherein the reinforcing structure is coupled to at least one vertical frame member forming the port column such that the cell blocking device is configured to block a grid cell in the port column.

14. The automated storage and retrieval system according to any of claims 6-13, wherein the protruding element protrudes to an exterior of the storage grid when the panel is blocking the grid cell.

15. A method for selectively blocking a grid cell of the automated storage and retrieval system of any of claims 6-14 using the cell blocking device of any of claims 1-5, the method comprising:
selectively moving the cell blocking device relative to the grid cell such that it blocks the grid cell; and
subsequently, selectively moving the cell blocking device relative to the grid cell such that it does not block the grid cell and such that a container can be raised or lowered through the grid cell.
